# EUROPEAN PATENT APPLICATION

(11) **EP 4 694 522 A1**
(43) Date of publication of application: **11.02.2026**
(21) Application number: 25186876.6
(22) Date of filing: 02.07.2025
(51) Int. Cl.: H04W 74/00, H04L 5/00, H04W 8/22, H04W 52/02, H04W 74/0816, H04W 84/12

(54) **APPARATUS, SYSTEM, AND METHOD OF TRANSMIT (TX) UNAVAILABILITY (TX-UNAVAILABILITY) MODE**

(30) Priority: 08.08.2024 US 202418798644
(71) Applicant: INTEL Corporation, Santa Clara, CA 95054 (US)
(72) Inventor: KENNEY, Thomas J., Portland, 97229 (US); CARIOU, Laurent, 29290 Milizac (FR)
(74) Representative: Viering, Jentschura & Partner mbB Patent- und Rechtsanwälte

(57) **Abstract**

For example, an apparatus may include logic and circuitry configured to cause a non Access Point (AP) (non-AP) station (STA) to identify one or more Transmit (Tx) unavailability (Tx-unavailability) time periods during which the non-AP STA is to be at a Tx-unavailability mode at which the non-AP STA is to be unavailable to transmit to an AP and to be available to receive transmissions from the AP. For example, the non-AP STA may be configured to transmit a frame including Tx-unavailability information to the AP. For example, the Tx-unavailability information may be configured to indicate the one or more Tx-unavailability time periods.

## Description

### BACKGROUND

A Wireless Local Area network (WLAN) may include an Access Point (AP), which may communicate with one or more non-AP stations. For example, a non-AP station may be required to acknowledge one or more transmissions received from the AP, for example, by transmitting an Acknowledgement (ACK) to the AP.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic flow-chart illustration of a method of a Transmit (Tx) unavailability (Tx-unavailability) mode, in accordance with some demonstrative aspects.
Fig. 3 is a schematic flow-chart illustration of a method of a Tx-unavailability mode, in accordance with some demonstrative aspects.
Fig. 4 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 *(IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020);* IEEE 802.11be *(IEEE P802.11be*/*D5.0 Draft Standard for Information technology-Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), November 2023);* and/or IEEE802.11bn *(IEEE 802.11bn, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications - Amendment: Enhancements for Ultra High Reliability (UHR)))* and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a Wi-Fi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20GHz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S 1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

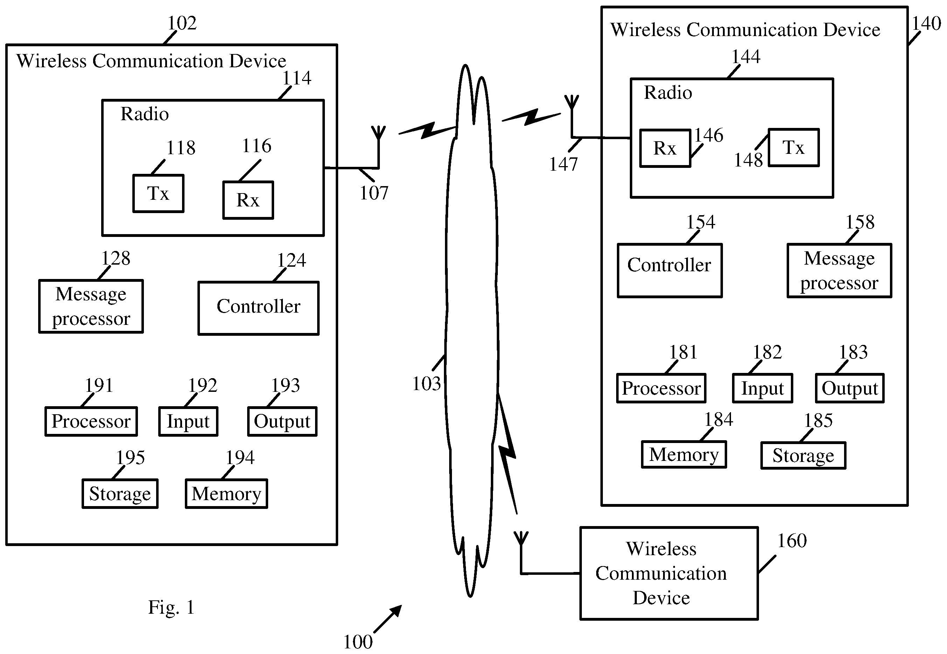

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a Wi-Fi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10GHz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include one or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a Wi-Fi 8 STA.

In other aspects, for example, devices 102, 140 and/or 160 may be configured to perform one or more operations, and/or functionalities of an Ultra High Reliability (UHR) STA.

In other aspects, for example, devices 102, 140, and/or 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a Wi-Fi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102, 140, and/or 160 may be configured to communicate in an HT network, an HE network, an EHT network, a UHR network, and/or any other network.

In some demonstrative aspects, devices 102, 140 and/or 160 may be configured to operate in accordance with one or more Specifications, for example, including one or more *IEEE 802.11 Specifications,* e.g., an *IEEE 802.11-2020 Specification, an IEEE 802.11be Specification,* and/or any other specification and/or protocol.

In some demonstrative aspects, device 102 may include, operate as, perform a role of, and/or perform the functionality of, an AP STA.

In some demonstrative aspects, device 140, and/or device 160 may include, operate as, perform a role of, and/or perform the functionality of, one or more non-AP STAs. For example, device 140 may include, operate as, perform a role of, and/or perform the functionality of, at least one non-AP STA, and/or device 160 may include, operate as, perform a role of, and/or perform the functionality of, at least one non-AP STA.

In some demonstrative aspects, device 102, device 140, and/or device 160 may include, operate as, perform a role of, and/or perform the functionality of, a Multi-Link Device (MLD). For example, device 102 may include, operate as, perform a role of, and/or perform the functionality of, at least one MLD, device 140 may include, operate as, perform a role of, and/or perform the functionality of, at least one MLD, and/or device 160 may include, operate as, perform a role of, and/or perform the functionality of, at least one MLD, e.g., as described below.

For example, an MLD may include a device that is a logical entity that is capable of supporting more than one affiliated station (STA) and can operate using one or more affiliated STAs. For example, the MLD may present one Medium Access Control (MAC) data service and a single MAC Service Access Point (SAP) to the Logical Link Control (LLC) sublayer. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102, device 140, and/or device 160 may be configured to operate as, perform the role of, and/or perform one or more functionalities of, an AP MLD.

In some demonstrative aspects, device 102, device 140, and/or device 160 may be configured to operate as, perform the role of, and/or perform one or more functionalities of, a non-AP MLD.

In other aspects, device 102, device 140, and/or device 160 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In some demonstrative aspects, device 102, device 140, and/or device 160 may be configured to implement one or more operations and/or functionalities of an unavailability mode mechanism, which may be configured to provide a technical solution to support one or more unavailability time periods, during which a non-AP STA is to be at an unavailability mode, e.g., as described below.

In some demonstrative aspects, device 102, device 140, and/or device 160 may be configured to implement one or more operations and/or functionalities of an unavailability mode mechanism, which may be configured to provide a technical solution to improve performance at coexistence events that a mobile device, e.g., a non-AP STA, may encounter, e.g., as described below.

For example, the unavailability mode mechanism may be configured to provide a technical solution to support a mobile device in informing an associated AP that the device is suffering from a coexistence event.

For example, the unavailability mode mechanism may be configured to provide a technical solution to adapt transmission and/or reception between the AP and the mobile device, for example, during these coexistence events.

For example, the unavailability mode mechanism may be configured to support a full-unavailability mode in which the mobile device may be unavailable, e.g., completely unavailable, for communication with the associated AP during one or more full-unavailability periods. For example, the mobile device may be allowed to perform one or more non-Wi-Fi activities during the one or more full-unavailability periods, e.g., BT transmissions, Peer to Peer (P2P) transmissions and/or any other additional or alternative non-Wi-Fi activity.

In some demonstrative aspects, device 102, device 140, and/or device 160 may be configured to implement one or more operations and/or functionalities of an unavailability mode mechanism, which may be configured to support a mode of operation to support a mobile device, which may, e.g., would, have non-Wi-Fi activities that would prevent a Wi-Fi STA of the mobile device from being able to transmit, for example, while preserving a possibility of the Wi-Fi STA to receive transmissions from its associated AP.

In one example, a mobile device may not be able use a Wi-Fi radio for transmissions from a WiFi-STA of the mobile device, for example, during a time period in which the mobile device is receiving a BT signal, e.g., since transmissions from the Wi-Fi radio may degrade reception of the BT signal. However, in such case, the mobile device may be allowed to use the Wi-Fi radio for reception of a Wi-Fi signal, which may not cause substantially any interference to the BT signal reception.

In some demonstrative aspects, device 102, device 140, and/or device 160 may be configured to implement one or more operations and/or functionalities of a Transmit (Tx) unavailability (Tx-unavailability) mode mechanism, which may be configured to provide a technical solution to support one or more Tx-unavailability periods, during which a non-AP STA is to be unavailable to transmit to an AP and to be available to receive transmissions from the AP, e.g., as described below.

In some demonstrative aspects, device 102, device 140, and/or device 160 may be configured to implement one or more operations and/or functionalities of a Tx-unavailability mode mechanism, which may be configured to allow a non-AP STA to inform an AP of one or more Tx-unavailability periods where the non-AP STA is to be unable to transmit to the AP, but may still be available to receive transmissions from the AP, e.g., as described below.

In some demonstrative aspects, the Tx-unavailability mode mechanism may be configured to utilize a periodic service period as Tx- unavailability periods, e.g., as described below.

In some demonstrative aspects, the Tx-unavailability mode mechanism may be configured to utilize the periodic service period, which may be defined, for example, by utilizing a P2P Target Wake Time (TWT) mechanism, for example, a modified and/or adapted P2P TWT mechanism, e.g., as described below.

In some demonstrative aspects, the Tx-unavailability mode mechanism may be configured to utilize a Tx-unavailability signaling mechanism, which may be configured to provide a technical solution to support a non-AP STA in signaling one or more Tx-unavailability periods to an AP, e.g., as described below.

In some demonstrative aspects, the Tx-unavailability signaling mechanism may be configured to support signaling of a timing of the one or more Tx-unavailability periods, a duration of the one or more Tx-unavailability periods, a periodicity of the one or more Tx-unavailability periods, and/or any other suitable additional or alternative information to configure the one or more Tx-unavailability periods, e.g., as described below.

In some demonstrative aspects, the Tx-unavailability signaling mechanism may be configured to define one or more operations, functionalities and/or requirements for the one or more Tx-unavailability periods, e.g., as described below.

In some demonstrative aspects, the Tx-unavailability mode mechanism may be configured to define one or more requirements and/or suggestions for an AP, for example, while the non-AP STA is at the Tx-unavailability mode, e.g., as described below.

In some demonstrative aspects, controller 154 may be configured to control, trigger, cause, and/or instruct a non-AP STA implemented by device 140 to identify one or more Tx-unavailability time periods during which the non-AP STA is to be at a Tx-unavailability mode, e.g., as described below.

In some demonstrative aspects, the Tx-unavailability mode may include a mode at which the non-AP STA is to be unavailable to transmit to an AP, e.g., an AP implemented by device 102, and to be available to receive transmissions from the AP, e.g., as described below.

In some demonstrative aspects, controller 154 may be configured to control, trigger, cause, and/or instruct the non-AP STA implemented by device 140 to transmit a frame including Tx-unavailability information to the AP, e.g., as described below.

In some demonstrative aspects, the Tx-unavailability information may be configured to indicate the one or more Tx-unavailability time periods, e.g., as described below.

In some demonstrative aspects, controller 124 may be configured to control, trigger, cause, and/or instruct an AP implemented by device 102 to process a frame from a non-AP STA, for example, to identify Tx-unavailability information corresponding to the non-AP STA, e.g., as described below.

In some demonstrative aspects, the frame received by the AP implemented by device 102 may include the frame transmitted by the non-AP STA implemented by device 140, e.g., as described above.

In some demonstrative aspects, controller 124 may be configured to control, trigger, cause, and/or instruct the AP implemented by device 102 to process the Tx-unavailability information, for example, to identify one or more Tx-unavailability time periods during which the non-AP STA is to be at a Tx-unavailability mode at which the non-AP STA is to be unavailable to transmit to an AP and to be available to receive transmissions from the AP, e.g., as described below.

In some demonstrative aspects, controller 124 may be configured to control, trigger, cause, and/or instruct the AP implemented by device 102 to prohibit the AP from transmitting to the non-AP STA transmissions, which require an acknowledgement from the non-AP STA, during the one or more Tx-unavailability time periods, e.g., as described below.

In some demonstrative aspects, controller 124 may be configured to control, trigger, cause, and/or instruct the AP implemented by device 102 to transmit an acknowledgment request to the non-AP STA, for example, after a Tx-unavailability time period of the one or more Tx-unavailability time periods, e.g., as described below.

In some demonstrative aspects, the acknowledgment request may be configured to request the non-AP STA to acknowledge a transmission sent from the AP to the non-AP STA during the Tx-unavailability time period, e.g., as described below.

In some demonstrative aspects, the Tx-unavailability information transmitted by a non-AP STA, e.g., the non-AP STA implemented by device 140may be configured to indicate the one or more Tx-unavailability time periods during which the non-AP STA is to be at the Tx-unavailability mode, e.g., as described below.

In some demonstrative aspects, the Tx-unavailability information may include start time information to indicate a start time of a Tx-unavailability time period of the one or more Tx-unavailability time periods, e.g., as described below.

In some demonstrative aspects, the Tx-unavailability information may include periodicity information to indicate a periodicity of a periodic sequence of Tx-unavailability time periods, e.g., as described below.

In other aspects, the Tx-unavailability information may include any other additional or alternative information corresponding to the one or more Tx-unavailability time periods.

In some demonstrative aspects, controller 154 may be configured to control, trigger, cause, and/or instruct the non-AP STA implemented by device 140 to transmit to the AP, e.g., the AP implemented by device 102, another frame including a Tx-unavailability termination indication to terminate the Tx-unavailability mode, e.g., as described below.

In some demonstrative aspects, controller 124 may be configured to control, trigger, cause, and/or instruct the AP implemented by device 102 to identify that the Tx-unavailability mode is to be terminated for the non-AP STA, e.g., the non-AP STA implemented by device 140, for example, based on a Tx-unavailability termination indication in another frame from the non-AP STA, e.g., as described below.

In some demonstrative aspects, controller 124 may be configured to, for example, based on the Tx-unavailability termination indication, allow the AP implemented by device 102 to transmit to the non-AP STA, e.g., the non-AP STA implemented by device 140, a transmission which requires an acknowledgement from the non-AP STA, e.g., as described below.

In some demonstrative aspects, the Tx-unavailability information transmitted by a non-AP STA, e.g., the non-AP STA implemented by device 140, may include Modulation and Coding Scheme (MCS) information, for example, to indicate a suggested MCS for transmissions from the AP to the non-AP STA at the Tx-unavailability mode, e.g., as described below.

In some demonstrative aspects, controller 124 may be configured to control, trigger, cause, and/or instruct the AP implemented by device 102 to configure a transmission to the non-AP STA, e.g., the non-AP STA implemented by device 140, during a Tx-unavailability time period of the one or more Tx-unavailability time periods, for example, based on the MCS information received from the non-AP STA, e.g., as described below.

In some demonstrative aspects, the Tx-unavailability information transmitted by a non-AP STA, e.g., the non-AP STA implemented by device 140, may include stream count information, for example, to indicate a recommended stream count for transmissions from the AP to the non-AP STA at the Tx-unavailability mode, e.g., as described below.

In some demonstrative aspects, controller 124 may be configured to control, trigger, cause, and/or instruct the AP implemented by device 102 to configure a transmission to the non-AP STA, e.g., the non-AP STA implemented by device 140, during a Tx-unavailability time period of the one or more Tx-unavailability time periods, for example, based on the stream count information received from the non-AP STA, e.g., as described below.

In some demonstrative aspects, the Tx-unavailability information transmitted by a non-AP STA, e.g., the non-AP STA implemented by device 140, may include modulation information, for example, to indicate one or more suggested modulation types to be disallowed for transmissions from the AP to the non-AP STA at the Tx-unavailability mode, e.g., as described below.

In some demonstrative aspects, controller 124 may be configured to control, trigger, cause, and/or instruct the AP implemented by device 102 to configure a transmission to the non-AP STA, e.g., the non-AP STA implemented by device 140, during a Tx-unavailability time period of the one or more Tx-unavailability time periods, for example, based on the modulation information received from the non-AP STA, e.g., as described below.

In some demonstrative aspects, controller 154 may be configured to control, trigger, cause, and/or instruct the non-AP STA implemented by device 140 to include in the frame, which includes the Tx-unavailability information, Service Period (SP) information configured to define one or more SPs, e.g., as described below.

In some demonstrative aspects, the Tx-unavailability information may be configured to define the one or more Tx-unavailability time periods, for example, based on the one or more SPs, e.g., as described below.

In some demonstrative aspects, the Tx-unavailability information may be configured to define the one or more Tx-unavailability time periods during the one or more SPs, e.g., as described below.

In some demonstrative aspects, the Tx-unavailability information may include transmit capability information, which may be configured, for example, to indicate that a transmit capability of the non-AP STA is to be disabled during the one or more SPs, and that the transmit capability of the non-AP STA is to be enabled outside the one or more SPs, e.g., as described below.

In some demonstrative aspects, the Tx-unavailability information may be configured to define the one or more Tx-unavailability time periods outside the one or more SPs, e.g., as described below.

In some demonstrative aspects, the Tx-unavailability information may include transmit capability information, which may be configured to indicate that a transmit capability of the non-AP STA is to be disabled outside the one or more SPs, and that the transmit capability of the non-AP STA is to be enabled during the one or more SPs, e.g., as described below.

In some demonstrative aspects, the SP information may include an SP type indication to indicate an SP type, e.g., as described below.

In some demonstrative aspects, the SP type indication may be set to a predefined SP type indication setting to indicate a Tx-unavailability SP type, e.g., as described below.

In some demonstrative aspects, the SP information may include a P2P TWT information element, which may be configured, for example, to define one or more P2P TWT SPs, e.g., as described below.

In some demonstrative aspects, the Tx-unavailability information may be configured to define the one or more Tx-unavailability time periods, for example, based on the one or more P2P TWT SPs, e.g., as described below.

In other aspects, the SP information may be configured to define any other suitable type of additional or alternative SPs, and the Tx-unavailability information may be configured to define the one or more Tx-unavailability time periods based on the additional or alternative type of SPs.

In some demonstrative aspects, the P2P TWT information element may include a TWT type indication to indicate a TWT type, e.g., as described below.

In some demonstrative aspects, the TWT type indication may be set to a predefined TWT type indication setting to indicate a Tx-unavailability TWT type, e.g., as described below.

In some demonstrative aspects, the Tx-unavailability information may be configured to indicate a Tx-unavailability time period during a TxOP in which the frame including the Tx-unavailability information is received, e.g., as described below.

In some demonstrative aspects, controller 154 may be configured to control, trigger, cause, and/or instruct the non-AP STA implemented by device 140 to transmit the frame including the Tx-unavailability information, for example, during a Transmit Opportunity (TxOP), e.g., as described below.

In some demonstrative aspects, the Tx-unavailability information may be configured, for example, to indicate a Tx-unavailability time period during the TxOP, e.g., as described below.

In some demonstrative aspects, controller 154 may be configured to control, trigger, cause, and/or instruct the non-AP STA implemented by device 140 to transmit the frame including the Tx-unavailability information, for example, as an Initial Control Frame Response (ICR) frame, e.g., as described below.

In some demonstrative aspects, controller 154 may be configured to control, trigger, cause, and/or instruct the non-AP STA implemented by device 140 to transmit the frame including the Tx-unavailability information, for example, as the ICR frame in response to an Initial Control Frame (ICF) received from the AP during a TxOP, e.g., as described below.

In some demonstrative aspects, controller 124 may be configured to control, trigger, cause, and/or instruct the AP implemented by device 102 to process the frame from the non-AP STA as an ICR frame, for example, in response to an ICF transmitted from the AP to the non-AP STA during a TxOP, e.g., as described below.

In some demonstrative aspects, the Tx-unavailability information from the non-AP STA, e.g., the non-AP STA implemented by device 140, may include transmit capability information configured to indicate that a transmit capability of the non-AP STA is to be disabled during the one or more Tx-unavailability time periods, e.g., as described below.

In other aspects, the Tx-unavailability information may include any other additional or alternative information to indicate one or more capabilities of the non-AP STA.

In some demonstrative aspects, controller 124 may be configured to allow the AP implemented by device 102 to transmit a transmission to the non-AP STA, e.g., the non-AP STA implemented by device 140, a Short Interframe Space (SIFS) following transmission of an ICF from the AP to the non-AP STA, for example, during a Tx-unavailability time period of the one or more Tx-unavailability time periods, e.g., as described below.

In some demonstrative aspects, controller 124 may be configured to allow the AP implemented by device 102 to transmit the transmission to the non-AP STA, for example, without waiting for an ICR from the non-AP STA, e.g., as described below.

In some demonstrative aspects, controller 154 may be configured to allow the non-AP STA implemented by device 140 to operate at a low-capability Receive (Rx) mode during a Tx-unavailability time period of the one or more Tx-unavailability time periods, e.g., as described below.

In some demonstrative aspects, controller 124 may be configured to control, trigger, cause, and/or instruct the AP implemented by device 102 to identify that the non-AP STA, e.g., the non-AP STA implemented by device 140, is to operate at the low-capability Rx mode during a Tx-unavailability time period of the one or more Tx-unavailability time periods, e.g., as described below.

In some demonstrative aspects, controller 124 may be configured to control, trigger, cause, and/or instruct the AP implemented by device 102 to transmit the ICF to the non-AP STA during the Tx-unavailability time period, for example, to indicate that the non-AP STA is to switch from the low-capability Rx mode to a full-capability Rx mode, e.g., as described below.

In some demonstrative aspects, controller 154 may be configured to control, trigger, cause, and/or instruct the non-AP STA implemented by device 140 to switch from the low-capability Rx mode to the full-capability Rx mode, for example, based on the ICF from the AP, for example, while remaining at the Tx-unavailability mode, e.g., as described below.

In some demonstrative aspects, controller 124 may be configured to allow the AP implemented by device 102 to transmit a transmission to the non-AP STA, for example, a SIFS following the ICF, e.g., as described below.

In some demonstrative aspects, controller 124 may be configured to allow the AP implemented by device 102 to transmit the transmission to the non-AP STA, for example, without waiting for an ICR from the non-AP STA, e.g., as described below.

In some demonstrative aspects, device 102, device 140, and/or device 160 may be configured to implement one or more operations and/or functionalities of an unavailability mode mechanism, which may be configured to support one or more unavailability time periods, during which a non-AP STA implemented by device 140 is to be at an unavailability mode, e.g., as described below.

In some demonstrative aspects, device 102, device 140, and/or device 160 may be configured to implement one or more operations and/or functionalities of a Tx-unavailability mode mechanism, which may be configured to support one or more Tx-unavailability time periods, during which a non-AP STA is to be at a Tx-unavailability mode at which the non-AP STA is to be unavailable to transmit to an AP and to be available to receive transmissions from the AP, e.g., as described below.

For example, it may be defined that a non-AP STA may inform its associated AP of one or more Tx-unavailability time periods, during which the non-AP STA will not be able to transmit to the AP, but will still be able to receive transmissions from the AP.

In some demonstrative aspects, device 102, device 140, and/or device 160 may be configured to implement one or more operations and/or functionalities of a Tx-unavailability mode mechanism, which may be configured to support the implementation of periodic service periods, e.g., long term periodic service periods, during which a non-AP STA may be operating under the Tx-unavailability mode, e.g., as described below.

In some demonstrative aspects, the Tx-unavailability mode mechanism may be configured to provide a technical solution to support configuration and/or signaling of the Tx-unavailability periodic service periods, during which the non-AP STA is to be at the Tx-unavailability mode, e.g., as described below.

In some demonstrative aspects, a P2P TWT mechanism may be configured to define and/or signal a sequence of service periods, for example, P2P TWT SPs, e.g., a new type of P2P TWT SPs, which may be used to define Tx-unavailability periodic service periods (SPs).

For example, the P2P TWT mechanism may be configured to signal a new type of SPs, which may be used to define the Tx-unavailability periodic service periods during which the non-AP STA is to be unavailable to transmit to an AP and to be available to receive transmissions from the AP, for example, instead of full-unavailability periods during which the non-AP is to be fully unavailable.

In some demonstrative aspects, an update may be defined, for example, for periodic negotiation of SPs, e.g., P2P TWT SPs for example, to support the configuration and/or signaling of the Tx-unavailability periodic service periods. For example, one or more parameter changes may be defined with respect to the configuration of the SPs. For example, a modified setting of one or more specific Tx/Rx parameters may be defined with respect to a service period, for example, compared to the setting of the one or more specific Tx/Rx parameters outside the service period, for example, to support the configuration and/or signaling of the Tx-unavailability periodic service periods.

In one example, it may be defined that a transmit capability is to be disabled within a service period, and that the transmit capability is to be enabled outside of the service period, for example, when using a service period mechanism, e.g., a P2P TWT mechanism, to define the Tx-unavailability periodic service periods. For example, this configuration may be utilized to configure the service period as the Tx-unavailability period.

In another example, it may be defined that a transmit capability is to be enabled within a service period, and that the transmit capability is to be disabled outside of the service period, for example, when using a service period mechanism, e.g., a P2P TWT mechanism, to define the Tx-unavailability periodic service periods. For example, this configuration may be utilized to configure the Tx-unavailability periods outside the service periods.

In some demonstrative aspects, device 102, device 140, and/or device 160 may be configured to implement one or more operations and/or functionalities of a Tx-unavailability mode mechanism, which may be configured to support a short-term and/or dynamic allocation of one or more Tx-unavailability periods, for example, during a TxOP, e.g., as described below.

In some demonstrative aspects, the Tx-unavailability mode mechanism may be configured to define that a non-AP STA may transmit during a TxOP a frame, which may include Tx-unavailability information to configure a Tx-unavailability period, for example, during the TxOP, e.g., as described below.

In some demonstrative aspects, the frame including the unavailability information may include an ICR frame. For example, the non-AP STA may transmit the ICR frame in response to an ICF received from the AP during the TxOP.

In other aspects, the frame including the-unavailability information may include any other type of frame.

In one example, the Tx-unavailability information in the ICR frame may include start time information to indicate a start time of the Tx-unavailability time period, and/or duration information to indicate a duration of the Tx-unavailability time period.

In another example, the Tx-unavailability information in the ICR frame may include any other additional or alternative information to configure the Tx-unavailability time period.

For example, it may be defined that a short-term indication of one or more parameter changes, e.g., Tx/Rx parameter changes, may be signaled in a frame sent by the non-AP STA within a TxOP, for example, to indicate at what time, e.g., including immediately, and/or for how long, the non-AP STA is to disable its capability to transmit while preserving the capability to receive.

For example, one or more fields may be configured in, and/or added to, an ICF and/or an ICR frame of a TxOP, for example, to indicate at what time and for how long the non-AP STA is to disable Tx capabilities, for example, while still preserving with the capability to receive.

In one example, one or more fields of the ICF and/or the ICR frame, which may be configured to indicate a full unavailability mode, may be reconfigured, for example, to indicate at what time and for how long the non-AP STA is to be at the Tx-unavailability mode, for example, instead of indicating the full-unavailability mode.

In one example, one or more fields may be added to the ICF and/or the ICR frame, for example, to indicate at what time and for how long the non-AP STA is to be at the Tx-unavailability mode.

In some demonstrative aspects, device 102, device 140, and/or device 160 may be configured to implement one or more operations and/or functionalities of a Tx-unavailability mode mechanism, which may be configured to support a Tx-unavailability termination indication, for example, to indicate termination of a Tx-unavailability mode, e.g., as described below.

For example, it may be defined that a non-AP STA, e.g., a non-AP STA implemented by device 140, may be allowed to send a frame to an AP, for example, including an indication (also referred to as the "Tx-unavailability termination indication"), to indicate a termination of a Tx-unavailability period (also referred to as a "period of disabled Tx capability").

For example, it may be defined that the Tx-unavailability termination indication may be used by the non-AP STA to indicate to the AP that the non-AP STA is now fully capable, e.g., both Tx-capable and Rx-capable, for communication with the AP.

For example, it may be defined that any frame sent by the non-AP STA to the AP during a Tx-unavailability period may be treated as an indication that the non-AP STA is back into full capability.

In one example, the AP may identify based on the frame transmitted from the non-AP STA that an SP is to be terminated, e.g., in case the Tx-unavailability period is defined in a TWT SP.

In one example, the AP may identify based on the frame transmitted from the non-AP STA that a disabled-Tx period is to be terminated, e.g., in case the Tx-unavailability period is defined as a disabled-Tx period, e.g., in a TxOP.

In some demonstrative aspects, device 102, device 140, and/or device 160 may be configured to implement one or more operations and/or functionalities of a Tx-unavailability mode mechanism, which may be configured to define a mode of operation, e.g., a Tx-unavailability mode, when a non-AP STA operates with its receive capabilities enabled and its transmit capabilities disabled, e.g., as described below.

For example, it may be defined that during the Tx-unavailability mode acknowledgements are never to be requested and sent in response to transmissions from an AP to the non-AP STA.

For example, the AP may select to not indicate that it expects a Block Acknowledgement (BA) in response to a transmission to the non-AP STA, for example, even if immediate BA is activated for the non-AP STA.

For example, it may be defined that the AP is to later send a BA Request (BAR), for example, to request a status of MPDUs sent from the AP to the non-AP STA during a phase when the Tx capabilities were disabled on the non-AP STA side.

For example, the AP may be allowed to use a BAR to also request a status from a non-AP STA operating over a particular link at the Tx-unavailability mode, for example, with respect to any other links, for example, even during a Tx-unavailability time period (also referred to as "Tx capability disable period").

For example, it may be defined that at the Tx-unavailability mode the non-AP STA is considered to be, e.g., always be, in an active mode, e.g., able to receive transmissions from the AP.

For example, it may be defined that the non-AP STA may be allowed to operate at a low-capability Rx mode, for example, at the Tx-unavailability mode. For example, the low-capability Rx mode may be configured according to one or more low-capability Rx parameters, e.g., including a 20MHz Rx frequency, an MCS0, a non-HT duplicate transmission and/or any other additional or alternative parameters and/or setting.

For example, it may be defined the non-AP STA is to switch, e.g., transition, from the low-capability Rx mode to a full-capability Rx mode.

For example, it may be defined the non-AP STA may be allowed to transition between the low-capability Rx mode and the full-capability Rx mode, for example, at the beginning of a TxOP, for example, based on an ICF received from the AP.

For example, the non-AP STA may not be able to send an ICR frame in response to an ICF from the AP during the Tx-unavailability mode.

For example, it may be defined that the AP is to send the ICF that indicates the non-AP STA as an intended receiver of a TxOP. For example, the ICF may include information, e.g., some or all of the information, which may be necessary for the non-AP STA to transition from the low-capability Rx mode to the full-capability Rx mode. For example, the ICF may include information of an intermediate Frame Check Sequence (FCS) field, padding and/or any other additional or alternative parameters and/or setting.

For example, it may be defined that, the AP is to send a transmission to the non-AP STA a SIFS time after the end of the ICF, for example, without waiting for a response from the non-AP STA. For example, it may be defined that a PPDU in the transmission that follows from the AP, e.g., which is likely to include data frames, is not to solicit an immediate acknowledgement (ACK) from the non-AP STA.

For example, during the Tx-unavailability mode, the AP may be allowed to transmit packets to the non-AP STA. However, the AP may not receive from the non-AP BA frames to indicate whether the packets sent to the non-AP STA were successfully received or not.

For example, it may be defined that the AP may use, e.g., should use, for rate adaptation one or more transmission parameters supporting a reduced rate, e.g., a lower MCS, a lower stream count and/or any other additional or alternative parameters, for example, to ensure successful transmission of the packets from the AP.

For example, it may be defined that the AP is to configure frames to be sent to the non-AP STA at the Tx-unavailability mode, for example, based on Tx-unavailability information received from the non-AP STA, for example, to ensure successful transmission of the frames from the AP to the non-AP STA.

For example, the non-AP STA may configure the Tx-unavailability information to provide the AP with information about how to operate when the non-AP STA is at the Tx-unavailability mode, for example, to ensure successful reception of the frames from the AP.

For example, the non-AP STA may configure the Tx-unavailability information to indicate a suggested MCS offset to be used by the AP for transmissions from the AP to the non-AP STA at the Tx-unavailability mode. For example, the suggested MCS offset may include a number to reduce to on an MCS table from the one computed in the rate adaptation.

For example, the non-AP STA may configure the Tx-unavailability information to indicate a recommended stream count to be used by the AP for transmissions from the AP to the non-AP STA at the Tx-unavailability mode. For example, the recommended stream count may include a reduced stream count operation, for example, to allow for diversity gains.

For example, the non-AP STA may configure the Tx-unavailability information to indicate suggested modulation types to be disallowed for transmissions from the AP to the non-AP STA at the Tx-unavailability mode. For example, the suggested disallowed modulation types may be based on actual capabilities of the non-AP STA, which may have already been negotiated. In one example, in case high modulation types, such as 1024/4096, are allowed, the suggested modulation types may, e.g., would, disallow these high modulation types during one or more Tx-unavailability time periods of the non-AP STA.

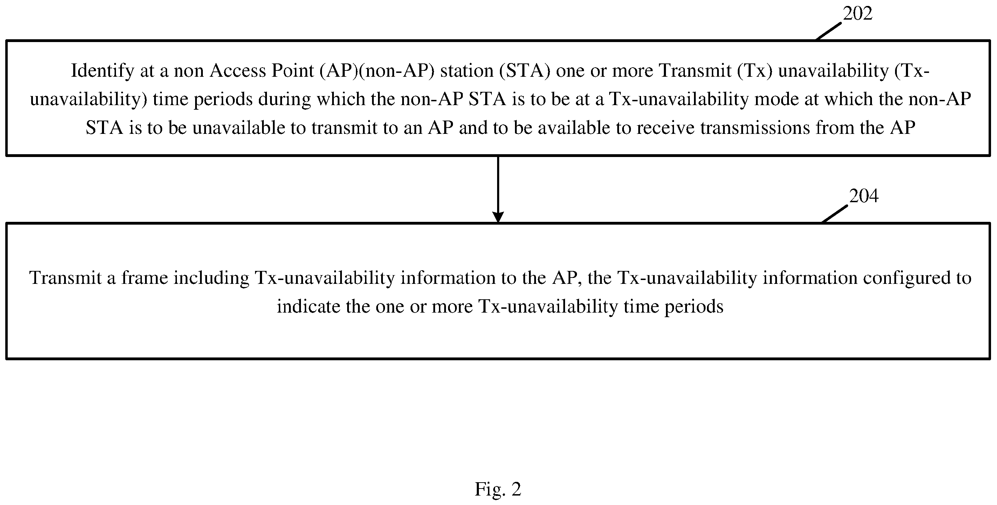

Reference is made to Fig. 2, which schematically illustrates a method of a Tx-unavailability mode, in accordance with some demonstrative aspects. For example, one or more of the operations of the method of Fig. 2 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 202, the method may include identifying, at a non-AP STA, one or more Tx-unavailability time periods during which the non-AP STA is to be at a Tx-unavailability mode at which the non-AP STA is to be unavailable to transmit to an AP and to be available to receive transmissions from the AP. For example, controller 154 (Fig. 1) may be configured to cause, trigger, and/or control a non-AP STA implemented by device 140 (Fig. 1) to identify one or more Tx-unavailability time periods during which the non-AP STA is to be at a Tx-unavailability mode at which the non-AP STA is to be unavailable to transmit to an AP and to be available to receive transmissions from the AP, e.g., as described above.

As indicated at block 204, the method may include transmitting a frame including Tx-unavailability information to the AP. For example, the Tx-unavailability information may be configured to indicate the one or more Tx-unavailability time periods. For example, controller 154 (Fig. 1) may be configured to cause, trigger, and/or control the non-AP STA implemented by device 140 (Fig. 1) to transmit the frame including the Tx-unavailability information to the AP, e.g., as described above.

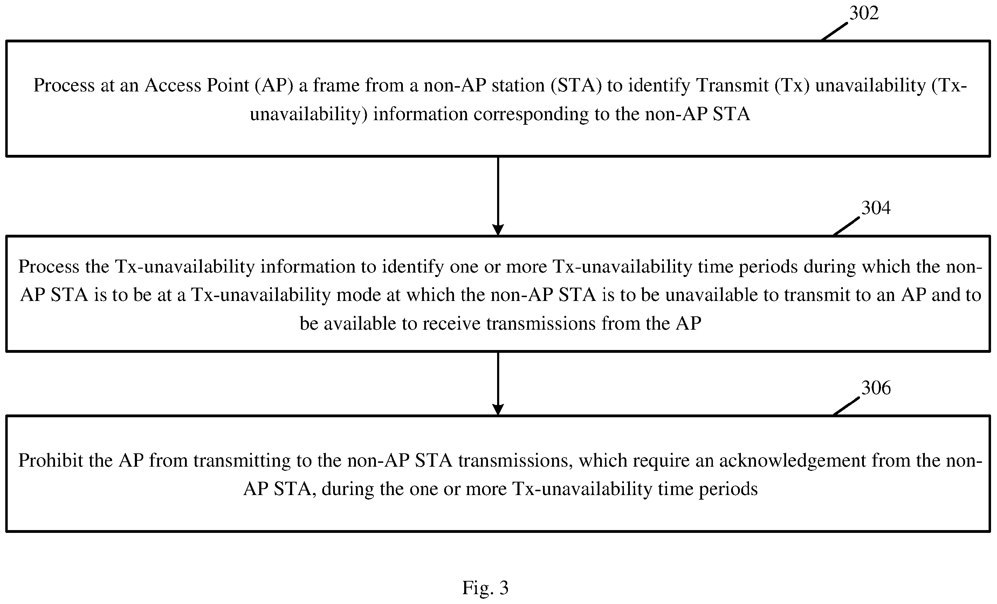

Reference is made to Fig. 3, which schematically illustrates a method of a Tx-unavailability mode, in accordance with some demonstrative aspects. For example, one or more of the operations of the method of Fig. 3 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 302, the method may include processing, at an AP, a frame from a non-AP STA to identify Tx-unavailability information corresponding to the non-AP STA. For example, controller 124 (Fig. 1) may be configured to cause, trigger, and/or control an AP implemented by device 102 (Fig. 1) to process a frame from a non-AP STA to identify Tx-unavailability information corresponding to the non-AP STA, e.g., as described above.

As indicated at block 304, the method may include processing the Tx-unavailability information to identify one or more Tx-unavailability time periods during which the non-AP STA is to be at a Tx-unavailability mode at which the non-AP STA is to be unavailable to transmit to an AP and to be available to receive transmissions from the AP. For example, controller 124 (Fig. 1) may be configured to cause, trigger, and/or control the AP implemented by device 102 (Fig. 1) to process the Tx-unavailability information to identify one or more Tx-unavailability time periods during which the non-AP STA is to be at a Tx-unavailability mode at which the non-AP STA is to be unavailable to transmit to an AP and to be available to receive transmissions from the AP, e.g., as described above.

As indicated at block 306, the method may include prohibiting the AP from transmitting to the non-AP STA transmissions, which require an acknowledgement from the non-AP STA, during the one or more Tx-unavailability time periods. For example, controller 124 (Fig. 1) may be configured to cause, trigger, and/or control the AP implemented by device 102 (Fig. 1) to prohibit the AP from transmitting to the non-AP STA transmissions, which require an acknowledgement from the non-AP STA, during the one or more Tx-unavailability time periods, e.g., as described above.

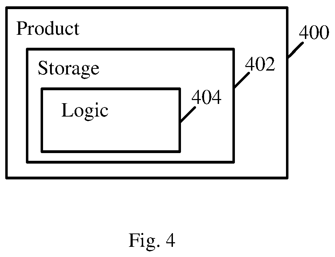

Reference is made to Fig. 4, which schematically illustrates a product of manufacture 400, in accordance with some demonstrative aspects. Product 400 may include one or more tangible computer-readable ("machine-readable") non-transitory storage media 402, which may include computer-executable instructions, e.g., implemented by logic 404, operable to, when executed by at least one computer processor, enable the at least one computer processor to implement one or more operations at device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2, and/or 3, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 400 and/or machine readable storage media 402 may include one or more types of computer-readable storage media capable of storing data, including volatile memory, non-volatile memory, removable or non-removable memory, erasable or non-erasable memory, writeable or re-writeable memory, and the like. For example, machine readable storage media 402 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 404 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 404 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause a non Access Point (AP) (non-AP) station (STA) to identify one or more Transmit (Tx) unavailability (Tx-unavailability) time periods during which the non-AP STA is to be at a Tx-unavailability mode at which the non-AP STA is to be unavailable to transmit to an AP and to be available to receive transmissions from the AP; transmit a frame comprising Tx-unavailability information to the AP, the Tx-unavailability information configured to indicate the one or more Tx-unavailability time periods.

Example 2 includes the subject matter of Example 1, and optionally, wherein the frame comprises Service Period (SP) information configured to define one or more SPs, wherein the Tx-unavailability information is configured to define the one or more Tx-unavailability time periods based on the one or more SPs.

Example 3 includes the subject matter of Example 2, and optionally, wherein the Tx-unavailability information is configured to define the one or more Tx-unavailability time periods during the one or more SPs.

Example 4 includes the subject matter of Example 3, and optionally, wherein the Tx-unavailability information comprises transmit capability information configured to indicate that a transmit capability of the non-AP STA is to be disabled during the one or more SPs, and that the transmit capability of the non-AP STA is to be enabled outside the one or more SPs.

Example 5 includes the subject matter of Example 2, and optionally, wherein the Tx-unavailability information is configured to define the one or more Tx-unavailability time periods outside the one or more SPs.

Example 6 includes the subject matter of Example 5, and optionally, wherein the Tx-unavailability information comprises transmit capability information configured to indicate that a transmit capability of the non-AP STA is to be disabled outside the one or more SPs, and that the transmit capability of the non-AP STA is to be enabled during the one or more SPs.

Example 7 includes the subject matter of any one of Examples 2-6, and optionally, wherein the SP information comprises an SP type indication to indicate an SP type, wherein the SP type indication is set to a predefined SP type indication setting to indicate a Tx-unavailability SP type.

Example 8 includes the subject matter of any one of Examples 2-7, and optionally, wherein the SP information comprises a Peer to Peer (P2P) Target Wake Time (TWT) information element configured to define one or more P2P TWT SPs.

Example 9 includes the subject matter of Example 8, and optionally, wherein the P2P TWT information element comprises a TWT type indication to indicate a TWT type, wherein the TWT type indication is set to a predefined TWT type indication setting to indicate a Tx-unavailability TWT type.

Example 10 includes the subject matter of Example 1, and optionally, wherein the apparatus is configured to cause the non-AP STA to transmit the frame during a Transmit Opportunity (TxOP), wherein the Tx-unavailability information is configured to indicate a Tx-unavailability time period during the TxOP.

Example 11 includes the subject matter of Example 1, and optionally, wherein the apparatus is configured to cause the non-AP STA to transmit the frame as an Initial Control Frame Response (ICR) frame in response to an Initial Control Frame (ICF) received from the AP during a Transmit Opportunity (TxOP), wherein the Tx-unavailability information is configured to indicate a Tx-unavailability time period during the TxOP.

Example 12 includes the subject matter of any one of Examples 1-11, and optionally, wherein the Tx-unavailability information comprises transmit capability information configured to indicate that a transmit capability of the non-AP STA is to be disabled during the one or more Tx-unavailability time periods.

Example 13 includes the subject matter of any one of Examples 1-12, and optionally, wherein the apparatus is configured to allow the non-AP STA to operate at a low-capability Receive (Rx) mode during a Tx-unavailability time period of the one or more Tx-unavailability time periods, the low-capability Rx mode configured to support reception of an Initial Control Frame (ICF) from the AP.

Example 14 includes the subject matter of Example 13, and optionally, wherein the apparatus is configured to cause the non-AP STA to switch from the low-capability Rx mode to a full-capability Rx mode based on the ICF from the AP, while remaining at the Tx-unavailability mode.

Example 15 includes the subject matter of any one of Examples 1-14, and optionally, wherein the Tx-unavailability information comprises start time information to indicate a start time of a Tx-unavailability time period of the one or more Tx-unavailability time periods.

Example 16 includes the subject matter of any one of Examples 1-15, and optionally, wherein the Tx-unavailability information comprises periodicity information to indicate a periodicity of a periodic sequence of Tx-unavailability time periods.

Example 17 includes the subject matter of any one of Examples 1-16, and optionally, wherein the apparatus is configured to cause the non-AP STA to transmit to the AP another frame comprising a Tx-unavailability termination indication to terminate the Tx-unavailability mode.

Example 18 includes the subject matter of any one of Examples 1-17, and optionally, wherein the Tx-unavailability information comprises Modulation and Coding Scheme (MCS) information to indicate a suggested MCS for transmissions from the AP to the non-AP STA at the Tx-unavailability mode.

Example 19 includes the subject matter of any one of Examples 1-18, and optionally, wherein the Tx-unavailability information comprises stream count information to indicate a recommended stream count for transmissions from the AP to the non-AP STA at the Tx-unavailability mode.

Example 20 includes the subject matter of any one of Examples 1-19, and optionally, wherein the Tx-unavailability information comprises modulation information to indicate one or more suggested modulation types to be disallowed for transmissions from the AP to the non-AP STA at the Tx-unavailability mode.

Example 21 includes the subject matter of any one of Examples 1-20, and optionally, comprising a radio to transmit the frame to the AP.

Example 22 includes the subject matter of Example 21, and optionally, comprising one or more antennas connected to the radio, and a processor to execute instructions of an operating system of the non-AP.

Example 23 includes an apparatus comprising logic and circuitry configured to cause an Access Point (AP) to process a frame from a non-AP station (STA) to identify Transmit (Tx) unavailability (Tx-unavailability) information corresponding to the non-AP STA; process the Tx-unavailability information to identify one or more Tx-unavailability time periods during which the non-AP STA is to be at a Tx-unavailability mode at which the non-AP STA is to be unavailable to transmit to an AP and to be available to receive transmissions from the AP; and prohibit the AP from transmitting to the non-AP STA transmissions, which require an acknowledgement from the non-AP STA, during the one or more Tx-unavailability time periods.

Example 24 includes the subject matter of Example 23, and optionally, wherein the apparatus is configured to allow the AP to transmit an acknowledgment request to the non-AP STA after a Tx-unavailability time period of the one or more Tx-unavailability time periods, wherein the acknowledgment request is configured to request the non-AP STA to acknowledge a transmission sent from the AP to the non-AP STA during the Tx-unavailability time period.

Example 25 includes the subject matter of Example 23 or 24, and optionally, wherein the frame comprises Service Period (SP) information configured to define one or more SPs, wherein the Tx-unavailability information is configured to define the one or more Tx-unavailability time periods based on the one or more SPs.

Example 26 includes the subject matter of Example 25, and optionally, wherein the Tx-unavailability information is configured to define the one or more Tx-unavailability time periods during the one or more SPs.

Example 27 includes the subject matter of Example 26, and optionally, wherein the Tx-unavailability information comprises transmit capability information configured to indicate that a transmit capability of the non-AP STA is to be disabled during the one or more SPs, and that the transmit capability of the non-AP STA is to be enabled outside the one or more SPs.

Example 28 includes the subject matter of Example 25, and optionally, wherein the Tx-unavailability information is configured to define the one or more Tx-unavailability time periods outside the one or more SPs.

Example 29 includes the subject matter of Example 28, and optionally, wherein the Tx-unavailability information comprises transmit capability information configured to indicate that a transmit capability of the non-AP STA is to be disabled outside the one or more SPs, and that the transmit capability of the non-AP STA is to be enabled during the one or more SPs.

Example 30 includes the subject matter of any one of Examples 25-29, and optionally, wherein SP information comprises an SP type indication to indicate an SP type, wherein the SP type indication is set to a predefined SP type indication setting to indicate a Tx-unavailability SP type.

Example 31 includes the subject matter of any one of Examples 25-30, and optionally, wherein the SP information comprises a Peer to Peer (P2P) Target Wake Time (TWT) information element configured to define one or more P2P TWT SPs.

Example 32 includes the subject matter of Example 31, and optionally, wherein the P2P TWT information element comprises a TWT type indication to indicate a TWT type, wherein the TWT type indication is set to a predefined TWT type indication setting to indicate a Tx-unavailability TWT type.

Example 33 includes the subject matter of Example 23 or 24, and optionally, wherein the Tx-unavailability information is configured to indicate a Tx-unavailability time period during a Transmit Opportunity (TxOP) in which the frame is received.

Example 34 includes the subject matter of Example 23 or 24, and optionally, wherein the apparatus is configured to process the frame as an Initial Control Frame Response (ICR) frame in response to an Initial Control Frame (ICF) transmitted from the AP to the non-AP STA during a Transmit Opportunity (TxOP), wherein the Tx-unavailability information is configured to indicate a Tx-unavailability time period during the TxOP.

Example 35 includes the subject matter of any one of Examples 23-34, and optionally, wherein the Tx-unavailability information comprises transmit capability information configured to indicate that a transmit capability of the non-AP STA is to be disabled during the one or more Tx-unavailability time periods.

Example 36 includes the subject matter of any one of Examples 23-35, and optionally, wherein the apparatus is configured to allow the AP to transmit a transmission to the non-AP STA a Short Interframe Space (SIFS) following transmission of an Initial Control Frame (ICF) from the AP to the non-AP STA during a Tx-unavailability time period of the one or more Tx-unavailability time periods.

Example 37 includes the subject matter of Example 36, and optionally, wherein the apparatus is configured to allow the AP to transmit the transmission to the non-AP STA without waiting for an Initial Control Response (ICR) from the non-AP STA.

Example 38 includes the subject matter of any one of Examples 23-37, and optionally, wherein the apparatus is configured to identify that the non-AP STA is to operate at a low-capability Receive (Rx) mode during a Tx-unavailability time period of the one or more Tx-unavailability time periods, the low-capability Rx mode configured to support reception of an Initial Control Frame (ICF) from the AP; and to transmit the ICF to the non-AP STA during the Tx-unavailability time period to indicate that the non-AP STA is to switch from the low-capability Rx mode to a full-capability Rx mode.

Example 39 includes the subject matter of Example 38, and optionally, wherein the apparatus is configured to allow the AP to transmit a transmission to the non-AP STA a Short Interframe Space (SIFS) following the ICF.

Example 40 includes the subject matter of Example 39, and optionally, wherein the apparatus is configured to allow the AP to transmit the transmission to the non-AP STA without waiting for an Initial Control Response (ICR) from the non-AP STA.

Example 41 includes the subject matter of any one of Examples 23-40, and optionally, wherein the Tx-unavailability information comprises start time information to indicate a start time of a Tx-unavailability time period of the one or more Tx-unavailability time periods.

Example 42 includes the subject matter of any one of Examples 23-41, and optionally, wherein the Tx-unavailability information comprises periodicity information to indicate a periodicity of a periodic sequence of Tx-unavailability time periods.

Example 43 includes the subject matter of any one of Examples 23-42, and optionally, wherein the apparatus is configured to cause the AP to identify that the Tx-unavailability mode is to be terminated for the non-AP STA based on a Tx-unavailability termination indication in another frame from the non-AP STA.

Example 44 includes the subject matter of Example 43, and optionally, wherein the apparatus is configured to, based on the Tx-unavailability termination indication, allow the AP to transmit to the non-AP STA a transmission which requires an acknowledgement from the non-AP STA.

Example 45 includes the subject matter of any one of Examples 23-44, and optionally, wherein the Tx-unavailability information comprises Modulation and Coding Scheme (MCS) information to indicate a suggested MCS for transmissions from the AP to the non-AP STA at the Tx-unavailability mode.

Example 46 includes the subject matter of Example 45, and optionally, wherein the apparatus is configured to cause the AP to configure a transmission to the non-AP STA during a Tx-unavailability time period of the one or more Tx-unavailability time periods based on the MCS information.

Example 47 includes the subject matter of any one of Examples 23-46, and optionally, wherein the Tx-unavailability information comprises stream count information to indicate a recommended stream count for transmissions from the AP to the non-AP STA at the Tx-unavailability mode.

Example 48 includes the subject matter of Example 47, and optionally, wherein the apparatus is configured to cause the AP to configure a transmission to the non-AP STA during a Tx-unavailability time period of the one or more Tx-unavailability time periods based on the stream count information.

Example 49 includes the subject matter of any one of Examples 23-48, and optionally, wherein the Tx-unavailability information comprises modulation information to indicate one or more suggested modulation types to be disallowed for transmissions from the AP to the non-AP STA at the Tx-unavailability mode.

Example 50 includes the subject matter of Example 49, and optionally, wherein the apparatus is configured to cause the AP to configure a transmission to the non-AP STA during a Tx-unavailability time period of the one or more Tx-unavailability time periods based on the modulation information.

Example 51 includes the subject matter of any one of Examples 23-50, and optionally, comprising a radio to receive the frame from the non-AP STA.

Example 52 includes the subject matter of Example 51, and optionally, comprising one or more antennas connected to the radio, and a processor to execute instructions of an operating system of the AP.

Example 53 includes a wireless communication device comprising the apparatus of any of Examples 1-52.

Example 54 includes a mobile device comprising the apparatus of any of Examples 1-52.

Example 55 includes an apparatus comprising means for executing any of the described operations of any of Examples 1-52.

Example 56 includes a product comprising one or more tangible computer-readable non-transitory storage media comprising instructions operable to, when executed by at least one processor, enable the at least one processor to cause a wireless communication device to perform any of the described operations of any of Examples 1-52.

Example 57 includes an apparatus comprising: a memory interface; and processing circuitry configured to: perform any of the described operations of any of Examples 1-52.

Example 58 includes a method comprising any of the described operations of any of Examples 1-52.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a non Access Point (AP) (non-AP) station (STA), the method comprising:
identifying one or more Transmit (Tx) unavailability (Tx-unavailability) time periods during which the non-AP STA is to be at a Tx-unavailability mode at which the non-AP STA is to be unavailable to transmit to an AP and to be available to receive transmissions from the AP; and
transmitting a frame comprising Tx-unavailability information to the AP, the Tx-unavailability information configured to indicate the one or more Tx-unavailability time periods.

2. The method of claim 1 comprising transmitting the frame during a Transmit Opportunity (TxOP), wherein the Tx-unavailability information is configured to indicate a Tx-unavailability time period during the TxOP.

3. The method of claim 1 or 2 comprising transmitting the frame as an Initial Control Frame Response (ICR) frame in response to an Initial Control Frame (ICF) received from the AP during a Transmit Opportunity (TxOP), wherein the Tx-unavailability information is configured to indicate a Tx-unavailability time period during the TxOP.

4. The method of any one of claims 1-3 comprising allowing the non-AP STA to operate at a low-capability Receive (Rx) mode during a Tx-unavailability time period of the one or more Tx-unavailability time periods, the low-capability Rx mode configured to support reception of an Initial Control Frame (ICF) from the AP.

5. The method of any one of claims 1-4 comprising transmitting to the AP another frame comprising a Tx-unavailability termination indication to terminate the Tx-unavailability mode.

6. A method to be performed at an Access Point (AP), the method comprising:
processing a frame from a non-AP station (STA) to identify Transmit (Tx) unavailability (Tx-unavailability) information corresponding to the non-AP STA;
processing the Tx-unavailability information to identify one or more Tx-unavailability time periods during which the non-AP STA is to be at a Tx-unavailability mode at which the non-AP STA is to be unavailable to transmit to an AP and to be available to receive transmissions from the AP; and
prohibiting the AP from transmitting to the non-AP STA transmissions, which require an acknowledgement from the non-AP STA, during the one or more Tx-unavailability time periods.

7. The method of claim 6 comprising transmitting an acknowledgment request to the non-AP STA after a Tx-unavailability time period of the one or more Tx-unavailability time periods, wherein the acknowledgment request is configured to request the non-AP STA to acknowledge a transmission sent from the AP to the non-AP STA during the Tx-unavailability time period.

8. The method of claim 6 or 7 comprising allowing the AP to transmit a transmission to the non-AP STA a Short Interframe Space (SIFS) following transmission of an Initial Control Frame (ICF) from the AP to the non-AP STA during a Tx-unavailability time period of the one or more Tx-unavailability time periods.

9. The method of any one of claims 1-8, wherein the frame comprises Service Period (SP) information configured to define one or more SPs, wherein the Tx-unavailability information is configured to define the one or more Tx-unavailability time periods based on the one or more SPs.

10. The method of claim 9, wherein the Tx-unavailability information is configured to define the one or more Tx-unavailability time periods during the one or more SPs, wherein the Tx-unavailability information comprises transmit capability information configured to indicate that a transmit capability of the non-AP STA is to be disabled during the one or more SPs, and that the transmit capability of the non-AP STA is to be enabled outside the one or more SPs.

11. The method of claim 9, wherein the Tx-unavailability information is configured to define the one or more Tx-unavailability time periods outside the one or more SPs, wherein the Tx-unavailability information comprises transmit capability information configured to indicate that a transmit capability of the non-AP STA is to be disabled outside the one or more SPs, and that the transmit capability of the non-AP STA is to be enabled during the one or more SPs.

12. The method of any one of claims 1-11, wherein the Tx-unavailability information comprises transmit capability information configured to indicate that a transmit capability of the non-AP STA is to be disabled during the one or more Tx-unavailability time periods, and/or wherein the Tx-unavailability information comprises start time information to indicate a start time of a Tx-unavailability time period of the one or more Tx-unavailability time periods.

13. An apparatus comprising a controller configured to cause a wireless communication device to perform the method of any one of claims 1-12.

14. The apparatus of claim 13 comprising a radio to communicate the frame, one or more antennas connected to the radio, and a processor to execute instructions of an operating system.

15. A product comprising one or more tangible computer-readable non-transitory storage media comprising instructions operable to, when executed by at least one processor, enable the at least one processor to cause a wireless communication device to perform the method of any one of claims 1-12.
